# EUROPEAN PATENT APPLICATION

(11) **EP 4 773 148 A1**
(43) Date of publication of application: **08.07.2026**
(21) Application number: 24892597.6
(22) Date of filing: 05.02.2024
(51) Int. Cl.: G21B 1/23

(54) **IMPURITY DETECTION SYSTEM AND METHOD, AND FUSION REACTION SYSTEM**

(30) Priority: 22.11.2023 CN 202311566954
(71) Applicant: Shanghai Startorus Fusion Technology Company Limited, Shanghai 201808 (CN)
(72) Inventor: TAN, Yi, Xi'an, Shaanxi 712000 (CN); CHEN, Rui, Xi'an, Shaanxi 712000 (CN)
(74) Representative: Valet Patent Services Limited
(86) International application number: PCT/CN2024/076032
(87) International publication number: WO 2025/107429

(57) **Abstract**

An impurity detection system and method, and a fusion reaction system. The impurity detection system (10) comprises: a discharge electrode (101), an optical signal collection assembly (102), and a spectrometer (103), wherein the discharge electrode (101) is located in a reaction chamber of a nuclear fusion reaction apparatus, and the optical signal collection assembly (102) is connected to the spectrometer (103); the discharge electrode (101) is opposite an inner wall of the reaction chamber, and the discharge electrode (101) is used for discharging electricity to the inner wall of the reaction chamber to generate an electric spark; the optical signal collection assembly (102) is used for collecting a spectral signal corresponding to the electric spark and transmitting the spectral signal to the spectrometer (103); and the spectrometer (103) is used for analyzing the spectral signal, so as to obtain impurity information of a surface of the inner wall of the reaction chamber.

## Description

The present application claims priority to Chinese Patent Application "202311566954.4", filed on November 22, 2023 and entitled "IMPURITY DETECTION SYSTEM, METHOD AND FUSION REACTION SYSTEM", the entire content of which is incorporated herein by reference.

### TECHNICAL FIELD

The present application relates to the field of nuclear fusion technology, and in particular, to an impurity detection system and a method on a surface of an inner wall of a nuclear fusion reaction chamber and a fusion reaction system.

### BACKGROUND

Nuclear fusion technology has been widely studied because it may use low-cost materials to produce a large number of clean energies. A plasma with a high temperature, a high density and a high confinement is a basic requirement for realizing the nuclear fusion.

A nuclear fusion reaction apparatus (such as a Tokamak apparatus) usually generates a plasma in a reaction chamber. The plasma may be heated to a fusion reaction temperature, and then a fusion reaction may take place to release energy. During an operation of a fusion reaction apparatus, a heat flow and a particle flow from the plasma would interact with surface materials of an inner wall of the reaction chamber, resulting in a discharge of carbon, oxygen, iron, tungsten and other impurities from a surface of the inner wall of the reaction chamber to the plasma. These impurity elements would produce a strong radiation, reduce a temperature of the plasma, weaken a stability of the plasma, and make the fusion reaction impossible. Therefore, it is very important to know elemental compositions of the surface of the inner wall and reduce the production of impurities by various means in nuclear fusion.

However, a detection process for impurities on the surface of the inner wall of the reaction chamber is complex, and a detection efficiency needs to be improved.

### SUMMARY

In view of this, the present application provides an impurity detection system, a method and a fusion reaction system, which may simplify an impurity detection process for a surface of an inner wall of a nuclear fusion reaction chamber, and improve the detection efficiency.

According to an aspect of the embodiment of the present application, an impurity detection system is provided, which may be applied to detect impurities on a surface of an inner wall of a nuclear fusion reaction chamber. The impurity detection system includes: a discharge electrode, an optical signal acquisition assembly and a spectrometer; where the discharge electrode is arranged in a reaction chamber of a nuclear fusion reaction apparatus and faces towards an inner wall of the reaction chamber, and the discharge electrode is configured to discharge to the inner wall of the reaction chamber to generate an electric spark; and the optical signal acquisition assembly is connected with the spectrometer, and is configured to acquire a spectral signal corresponding to the electric spark and transmit the spectral signal to the spectrometer; and the spectrometer is configured to analyze the spectrum signal to obtain impurity information on the surface of the inner wall of the reaction chamber.

According to another aspect of the embodiment of the present application, an impurity detection method is provided, being applied to the impurity detection system. The method includes: applying a voltage to a discharge electrode in the impurity detection system enabling the discharge electrode to discharge to an inner wall of a reaction chamber of a nuclear fusion reaction apparatus to generate an electric spark; acquiring, by an optical signal acquisition assembly in the impurity detection system, a spectral signal corresponding to the electric spark; transmitting, by the optical signal acquisition assembly, the spectral signal to a spectrometer in the impurity detection system; and analyzing, by the spectrometer, the spectrum signal to obtain impurity information on a surface of the inner wall of the reaction chamber.

According to still another aspect of the embodiment of the present application, a fusion reaction system is provided. The fusion reaction system includes a nuclear fusion reaction apparatus and the impurity detection system of a surface of an inner wall of a nuclear fusion reaction chamber; and the impurity detection system is configured to detect the impurity information on the surface of the inner wall of the reaction chamber in the nuclear fusion reaction apparatus.

In the impurity detection system and method provided in the embodiments of the present application, a discharge electrode facing towards the inner wall of the reaction chamber may be provided in the reaction chamber of the nuclear fusion reaction apparatus, and an electric spark is generated by discharging to the inner wall of the reaction chamber through the discharge electrode. The optical signal acquisition assembly may acquire a spectral signal corresponding to the electric spark. Further, the spectrometer may analyze the spectral signal to obtain impurity information on the surface of the inner wall of the reaction chamber. Since the electric spark may be triggered merely by applying a voltage to the discharge electrode, a triggering process of the electric spark is relatively simple. Moreover, a time consumption for generating the spectral signal through the electric spark is relatively short, and an analysis difficulty of the spectral signal is relatively low, so that the impurity information may be obtained relatively simply and conveniently. It may be seen that a detecting process of the impurities on the inner wall of the reaction chamber may be simplified through the impurity detection system and the impurity detection method. Moreover, the efficiency and effect of the impurity detection may be improved.

### BRIEF DESCRIPTION OF THE DRAWINGS

FIG. 1 is a schematic structural diagram of an impurity detection system for a surface of an inner wall of a nuclear fusion reaction chamber provided in an embodiment of the present application.
FIG. 2 is a schematic structural diagram of an impurity detection system for a surface of an inner wall of another nuclear fusion reaction chamber provided in an embodiment of the present application.
FIG. 3 is a flow chart of an impurity detection method provided in an embodiment of the present application.
FIG. 4 is a flow chart of another impurity detection method provided in an embodiment of the present application.

### DETAILED DESCRIPTION OF EMBODIMENTS

In the following description, numerous specific details are set forth in order to provide a thorough understanding of the present application. However, the present application may be practiced in many other ways than those described herein, and those skilled in the art may make similar promotions without violating the meaning of the present application, and therefore, the present application is not subject to the specific implementation disclosed below.

Terms used in one or more embodiments of the present application are intended only to describe specific embodiments and are not intended to limit one or more embodiments of the present application. The terms "a", "the" and "this" in the singular form as used in one or more embodiments of the present application and the accompanying claims are also intended to include the majority form unless the context clearly indicates otherwise. It should also be understood that the term "and/or" as used in one or more embodiments of the present application refers to and encompasses any or all possible combinations of one or more related listed items. The term "at least one" in one or more embodiments of the present application means "one or more" and "a plurality of" means "two or more". The term "include/comprise" is an open-ended description and should be understood to mean "including/comprising but not limited" and may include additional content in addition to what has been described.

It should be understood that although the terms "first", "second" and the like may be used to describe various information in one or more embodiments of the present application, such information should not be limited to these terms. These terms are used only to distinguish the same type of information from one another. For example, without leaving the scope of one or more embodiments of the present application, "first" may also be referred to as "second", and similarly, "second" may also be referred to as "first". Depending on the context, the word "if" as used here may be interpreted as "when..." or "while..." or "respond to determination".

At present, nuclear fusion is considered to be an ideal choice to solve the human energy problem. A large amount of clean energy may be provided through nuclear fusion reaction. Moreover, a wide range of fuel sources with low cost can be used in a nuclear fusion reaction. Correspondingly, a nuclear fusion reaction apparatus has been widely studied. For example, Tokamak apparatus is a kind of nuclear fusion reaction apparatus that has been studied widely. The Tokamak apparatus may include a nuclear fusion reaction chamber in which a plasma may be generated. Further, a magnetic field generated by a magnet may confine the plasma within the reaction chamber, and the plasma may be heated to a fusion temperature to cause a nuclear fusion reaction by controlling a movement of the plasma.

During an operation process of the Tokamak apparatus, a heat flow and a particle flow from a core plasma would interact with a wall material of the reaction chamber, resulting in etching and deposition of the wall material. At the same time, a surface of plasma-facing components (PFCs), such as a first wall of the reaction chamber and a divertor, may generate impurities. The first wall is also a component faced by the plasma inside the reaction chamber. Impurities such as carbon, oxygen, iron, and tungsten may accumulate on a surface of the first wall, these impurity elements would produce a strong radiation, reduce a temperature of the plasma, weaken a stability of the plasma, and make the fusion reaction impossible. Impurities on the surface of the plasma-facing component may further cause a fuel retention, thereby threatening a safe operation of the Tokamak apparatus. Therefore, it is necessary to detect the impurities on the surface of the inner wall of the reaction chamber, so as to adjust a control condition of the plasma correspondingly based on the detected impurity information, which may ensure that the plasma is restrained with a higher performance, and the impurities adhered on the inner wall of the reaction chamber are reduced.

In a traditional impurity detection method for the surface of the inner wall of the reaction chamber, a wall material sample is extracted from the inner wall of the reaction chamber of the Tokamak apparatus after the apparatus has been working for a period of time and enters a maintenance period. And then by comparing a state change of the materials on the surface of the inner wall of the reaction chamber before and after the nuclear fusion reaction through an off-line diagnostic device, an influence on the inner wall of the reaction chamber caused by the nuclear fusion reaction can be determined. The diagnostic means may include analysis of the wall material sample by X-ray photoelectron spectroscopy, X-ray spectroscopy, nuclear reaction analysis, or secondary ion mass spectrometry. In the method, the timeliness of impurity detection on the surface of the inner wall of the reaction chamber is poor, therefore, the impurity information on the surface of the inner wall of the reaction chamber may not be obtained in real time. In the process of taking a sample and analyzing the sample, the sample is easy to be polluted, so as to affect a measurement result of the actual impurity information on the surface of the inner wall of the reaction chamber, causing a low accuracy of impurity detection.

In the related technologies, the impurities on the inner wall of the reaction chamber may be detected by laser-induced breakdown spectroscopy (LIBS). Through this technology, by focusing a high-power pulsed laser on the surface of the sample, chemical bonds of the substances on the surface are broken and chemical elements are ionized to form a cloud of high-temperature plasma composed of atoms, free electrons and ions. The atoms and ions in a high energy state inside the high-temperature plasma would jump to a low energy state, and emit light with characteristic wavelength at this time. By comparing and analyzing the wavelength and intensity of the light, the type and content of the elements in the sample may be determined. This technology is an in-situ online wall analysis method, which has the ability of rapid real-time, in-situ online and quantitative analysis of all elements. However, an LIBS system requires a high-power laser source and a complex optical system, which is costly and complicated to operate. In addition, due to the limitation of an optical path, LIBS may not detect all the positions of the surface of the inner wall freely, especially some corners heavily obstructed.

The present application provides an impurity detection system, which may detect the impurities on the surface of the inner wall of the reaction chamber of the nuclear fusion reaction apparatus simply and conveniently, and it has a relatively high detection timeliness, relatively good detection efficiency and effect, and relatively low detection cost. Correspondingly, the embodiment of the present application further relates to an impurity detection method applied to the impurity detection system and a fusion reaction system.

In the embodiment of the present application, the nuclear fusion reaction apparatus may include an annular reaction chamber. The reaction chamber is configured to contain plasma which may conduct a nuclear fusion reaction. Optionally, the reaction chamber may be a vacuum chamber. That is, the reaction chamber may be in a vacuum state during the nuclear fusion reaction.

The impurity detection system provided in the embodiment of the present application detects the impurity information on the surface of the inner wall of the reaction chamber of the nuclear fusion reaction apparatus through a spark discharge technology. Where the spark discharge is also a phenomenon of a self-excited conduction when gas between two electrodes is broken down by a strong electric field generated when a relatively high voltage is applied between the electrodes.

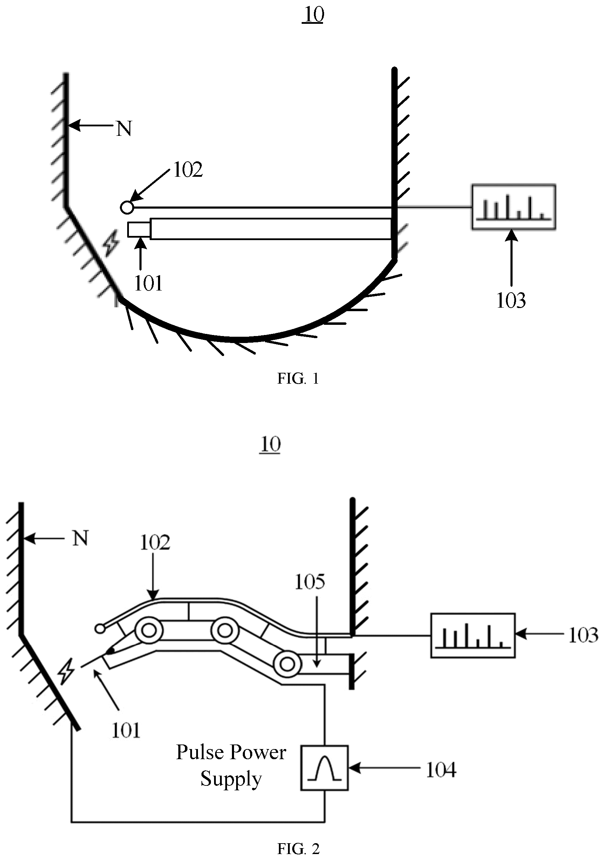

FIG. 1 is a schematic structural diagram of an impurity detection system for a surface of an inner wall of a nuclear fusion reaction chamber provided in an embodiment of the present application. As shown in FIG. 1, the impurity detection system 10 includes: a discharge electrode 101, an optical signal acquisition assembly 102, and a spectrometer 103.

In the embodiment of the present application, the discharge electrode 101 is arranged in the reaction chamber of the fusion nuclear reaction apparatus. It should be noted that FIG. 1 only illustrates a partial structure of the reaction chamber. Components in the impurity detection system 10 arranged in the reaction chamber may be fixed through a window of the reaction chamber. The discharge electrode 101 faces towards an inner wall N of the reaction chamber, and a gap exists between the discharge electrode 101 and the inner wall N of the reaction chamber. The discharge electrode 101 is configured to discharge toward the inner wall N of the reaction chamber to generate an electric spark between the discharge electrode 101 and the inner wall N of the reaction chamber.

In the embodiment of the present application, the optical signal acquisition assembly 102 is configured to acquire a spectrum signal corresponding to the electric spark. The optical signal acquisition assembly 102 is connected with the spectrometer 103, and may transmit the spectral signal to the spectrometer 103.

In the embodiment of the present application, the spectrometer 103 is configured to analyze the received spectrum signal to obtain impurity information on a surface of an inner wall N of the reaction chamber.

In the embodiment of the present application, the spectrometer 103 may analyze the spectral signal to determine a corresponding spectrum and light intensity of the spectral signal. Where the spectrum is also the wavelength characteristic of the light. The element information corresponding to the spectrum signal may be determined based on the spectrum and the light intensity. Then the element information is compared with an initial element information of a wall material of the inner wall N of the reaction chamber. In this way, the impurity information on the surface of the inner wall N of the reaction chamber may be determined.

In the embodiment of the present application, in a process of generating an electric spark between the discharge electrode 101 and the inner wall N of the reaction chamber, the gas between the discharge electrode 101 and the inner wall N of the reaction chamber may be broken down, and then a plasma with a relatively high temperature may be generated. The plasma with the relatively high temperature may excite more kinds of atoms in this region to be in an excited state, that is, an abundance of atomic excited state of the elements is increased. Each atom may emit light with a corresponding wavelength when jumping back to a ground state from an excited state, so that a relatively wide spectral line may be generated, more spectra may be detected, a better element identification effect may be realized correspondingly based on these spectra, and an integrity and an accuracy of element analysis on the surface of the inner wall of the reaction chamber may be improved.

Since the spark discharge may generate a spectral signal instantaneously (for example, in microseconds), a timeliness of impurity detection on the surface of the inner wall of the reaction chamber may be relatively high. In the embodiment of the present application, the impurity information on the surface of the inner wall N of the reaction chamber may be monitored in real time, which is beneficial for the nuclear fusion reaction apparatus to realize rapid feedback and real-time control on the information.

In addition, compared to an LIBS system which requires a high-power laser and a complex optical system, a spark discharge system adopted in the embodiment of the present application requires only one electrode as a discharge source, and only a relatively low voltage and a relatively low current are required to obtain enough energy to generate an electric spark. In this way, the structure of the device may be simplified and the energy consumption of the system may be reduced. That is, the impurity detection system is lower in cost, more compact in structure and easier to operate and maintain.

In summary, in the impurity detection system for the surface of the inner wall of the nuclear fusion reaction chamber provided in the embodiment of the present application, a discharge electrode facing towards the inner wall of the reaction chamber is provided in the reaction chamber of the nuclear fusion reaction apparatus, and an electric spark is generated by discharging to the inner wall of the reaction chamber through the discharge electrode. The optical signal acquisition assembly may acquire a spectral signal corresponding to the electric spark. Moreover, the spectrometer may analyze the spectral signal to obtain the impurity information on the surface of the inner wall of the reaction chamber. Since the electric spark may be triggered merely by applying a voltage to the discharge electrode, a triggering process of the electric spark is relatively simple. Moreover, a time consumption for generating the spectral signal through the electric spark is relatively short, and an analysis difficulty of the spectral signal is relatively low, so that the impurity information may be obtained relatively simply and conveniently. Therefore, a detecting process of the impurities on the inner wall of the reaction chamber may be simplified, and the efficiency and effect of impurity detection may be improved.

FIG. 2 is a schematic structural diagram of an impurity detection system for a surface of an inner wall of another nuclear fusion reaction chamber provided in an embodiment of the present application. With reference to FIG. 2, each component of the impurity detection system 10 and optional implementations of the impurity detection system are described below.

As shown in FIG. 2, the discharge electrode 101 in the impurity detection system 10 may be needle-shaped. An end portion of the needle-shaped discharge electrode 101 faces towards the inner wall N of the reaction chamber. By applying a voltage to the needle-shaped discharge electrode 101, charges may be concentrated at the end portion of the discharge electrode 101, and a charge distribution density of the end portion is relatively high. In this way, the required voltage may be even smaller and breakdown of the gas may be achieved more easily to produce the required spark.

For example, a material of the discharge electrode 101 may be conductive and may withstand high current and high voltage. For example, the material may be metal or stainless steel. A length of the needle-shaped discharge electrode 101 may reach a centimeter level. A diameter of the discharge electrode 101 may be less than 10 mm. For example, the diameter of the discharge electrode 101 may range from 2 to 3 mm, or from 7 to 8 mm.

In other implementations, the discharge electrode 101 may also be block-shaped or sheet-shaped, or in other shapes, which is not limited by the embodiments of the present application.

In the embodiment of the present application, the voltage to be applied to the discharge electrode 101 may be adjusted in advance to determine a voltage value that may produce a better gas breakdown effect. Then, the voltage may be applied to the discharge electrode 101 based on the voltage value. A magnitude of the voltage may be positively related to a distance between the discharge electrode 101 and the inner wall N of the reaction chamber, and positively related to a gas pressure in the reaction chamber. For example, the voltage may be less than 10 kilovolts.

In one embodiment, the discharge electrode 101 faces towards a target region in the inner wall N of the reaction chamber. The target region may be arranged at a bottom or a top of the reaction chamber. Since the number of impurities attached to the bottom and top of the reaction chamber is usually large, the impurity detection at the bottom or top of the reaction chamber may ensure a good impurity detection effect. The target region may also be any region in the inner wall N of the reaction chamber, so as to realize the impurity detection of any region on the surface of the inner wall N of the reaction chamber. In the embodiment of the present application, the region of the inner wall N in the reaction chamber faces towards the discharge electrode 101 is not limited.

As shown in FIG. 2, the impurity detection system 10 further includes a pulse power supply 104. Both ends of the pulse power supply 104 are respectively connected with the discharge electrode 101 and the inner wall N of the reaction chamber, and are configured to apply a pulse voltage to the discharge electrode 101 and the inner wall N of the reaction chamber. The pulse power supply 104 may be arranged outside the reaction chamber, and may be respectively connected with the discharge electrode 101 and the inner wall N of the reaction chamber through wires. A peak voltage of the pulse power supply 104 may reach more than 10 kilovolts, and a discharge time may be as low as 1 microsecond. In this way, an excitation capability of atoms may be ensured to be better, the spectral signals with relatively wide spectral lines may be excited, and a real-time property of impurity detection may be ensured to be relatively high.

As shown in FIG. 2, the impurity detection system 10 may further include a mechanical arm 105 arranged in the reaction chamber. The mechanical arm 105 is configured to fix the discharge electrode 101, and the discharge electrode 101 may be arranged at a front end of the mechanical arm 105. In some embodiments of the present application, the mechanical arm 105 may include a plurality of sub-arms sequentially hinged together. Each of the sub-arms may move respectively. The discharge electrode 101 is fixed with a sub-arm arranged at an end portion of the mechanical arm among the plurality of sub-arms.

The mechanical arm 105 is configured to drive the discharge electrode 101 to move (e.g., move back and forth and rotate), thereby, a position of the discharge electrode 101 relative to the inner wall N of the reaction chamber can be adjusted. The discharge electrode 101 may be moved to different regions of the inner wall N of the reaction chamber by the mechanical arm 105, so as to detect an impurity distribution in different regions on the surface of the inner wall N of the reaction chamber. For example, the mechanical arm 105 may drive the discharge electrode 101 to rapidly scan each corner on the surface of the inner wall N of the reaction chamber, so as to detect the impurity distribution in all regions on the surface of the inner wall of the reaction chamber.

The movement of the mechanical arm 105 may be performed at a stage when the nuclear fusion reaction is not performed in the reaction chamber. For example, the mechanical arm 105 may be moved during an interval between two nuclear fusion reactions to change the position of the discharge electrode 101. In this way, the movement of the mechanical arm 105 may be prevented from affecting parameters of the reaction chamber during the nuclear fusion reaction, so as to ensure that the nuclear fusion reaction is carried out stably.

In one embodiment, the impurity detection system 10 may further include a mechanical control unit (not shown in the drawings). The mechanical control unit may be connected with the mechanical arm 105 for controlling the mechanical arm 105 to move. The mechanical control unit may interact with a worker. The worker may operate the mechanical control unit to control the mechanical arm 105.

FIG. 1 and FIG. 2 take that the entire optical signal acquisition assembly 102 is arranged in the reaction chamber as an example to illustrate. In some implementations, only part of the structure of the optical signal acquisition assembly 102 may be arranged in the reaction chamber. For example, only an end portion of the optical signal acquisition assembly 102 is arranged in the reaction chamber. Alternatively, the optical signal acquisition assembly 102 may also be arranged outside the reaction chamber, and it only needs to ensure that the optical signal acquisition assembly 102 may acquire the spectrum signal corresponding to the electric spark generated in the reaction chamber. For example, the reaction chamber has a photic region, and the optical signal acquisition assembly 102 may be arranged outside the reaction chamber and is configured to acquire the spectral signal via the photic region.

The optical signal acquisition assembly 102 may be provided close to the discharge electrode 101, so as to acquire a clearer spectrum signal to ensure an acquisition effect of the spectrum signal. The optical signal acquisition assembly 102 may be connected with the spectrometer 103 through a wire. The spectrometer 103 may be arranged outside the reaction chamber.

As shown in FIG. 2, the optical signal acquisition assembly 102 may include an optical fiber. A head part of the optical fiber may be provided close to the discharge electrode 101, and a tail part of the optical fiber may be connected with the spectrometer 103, so that the optical fiber may directly transmit the spectrum signal to the spectrometer 103 after acquiring the spectrum signal. The optical fiber is relatively small in size and may be deformed to a certain degree, so that the optical fiber may play a good role in acquiring spectral signals in the reaction chamber. In one embodiment, the optical signal acquisition assembly 102 may include an optical conduit or other component that enables spectral signal acquisition.

In one embodiment, the optical signal acquisition assembly 102 is connected with the mechanical arm 105 and is arranged close to the discharge electrode 101. As shown in FIG. 2, the optical fiber may extend along the mechanical arm 105 and be fixed with each sub-arm of the mechanical arm 105.

In the embodiment of the present application, when it is necessary to detect impurities on the surface of the inner wall of the reaction chamber, the mechanical arm 105 may be adopted to position the discharge electrode 101 to a suitable position in the reaction chamber. An appropriate pulse voltage is applied to the discharge electrode 101 by using the pulse power supply 104, so that the discharge electrode 101 may generate an electric spark on the inner wall of the reaction chamber. The optical signal acquisition assembly 102 may collect the spectral signals emitted by the spark and transmit them to the spectrometer 103. The spectrometer 103 may analyze and process the collected spectral signal to determine an elemental composition of the inner wall material of the reaction chamber, and then may determine the impurity information on the surface of the inner wall of the reaction chamber.

In summary, in the impurity detection system for the surface of the inner wall of the nuclear fusion reaction chamber provided in the embodiment of the present application, a discharge electrode facing towards the inner wall of the reaction chamber is provided in the reaction chamber of the nuclear fusion reaction apparatus. An electric spark is generated by discharging to the inner wall of the reaction chamber through the discharge electrode. The optical signal acquisition assembly may acquire a spectral signal corresponding to the electric spark. Then, the spectrometer may analyze the spectral signal to obtain impurity information on the surface of the inner wall of the reaction chamber. Since the electric spark may be triggered merely by applying a voltage to the discharge electrode, a triggering process of the electric spark is relatively simple, a time consumption for generating the spectral signal through the electric spark is relatively short, and an analysis difficulty of the spectral signal is relatively low. In this way, the impurity information may be obtained simply and conveniently. Therefore, a detecting process of the impurities on the inner wall of the reaction chamber may be simplified, and the efficiency and effect of impurity detection may be improved.

The embodiment of the present application further provides a fusion reaction system, including a nuclear fusion reaction apparatus and the impurity detection system 10 on the surface of the inner wall of the nuclear fusion reaction chamber. The impurity detection system 10 is configured to detect the impurity information on the surface of the inner wall of the reaction chamber in the nuclear fusion reaction apparatus.

In one embodiment, the fusion reaction system further includes a plasma control unit. The plasma control unit may be connected with the impurity detection system 10 for controlling the plasma in the reaction chamber based on the impurity information. For example, a density, a temperature, a shape and other parameters of the plasma may be controlled.

For example, the worker may adjust the parameters of the nuclear fusion reaction apparatus by operating the plasma control unit, so as to control the plasma in the reaction chamber. For example, the voltage transmitted to a magnet in the nuclear fusion reaction apparatus may be adjusted by the plasma control unit.

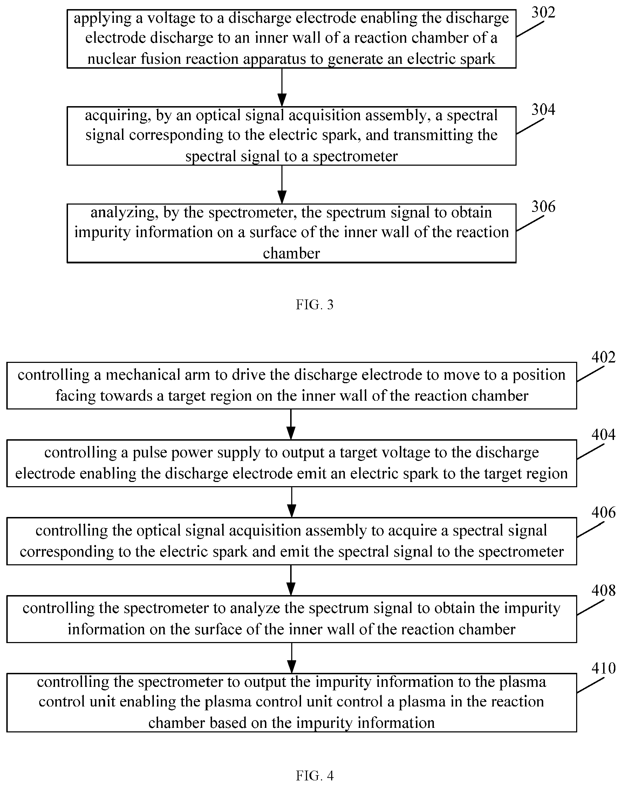

FIG. 3 is a flow chart of an impurity detection method provided in an embodiment of the present application. This method may be applied to the impurity detection system 10 on the surface of the inner wall of the nuclear fusion reaction chamber of FIG. 1 or FIG. 2. For example, the method may be executed by the control unit controlled by a worker. As shown in FIG. 3, the method may include the following steps.

In Step 302, applying a voltage to a discharge electrode enabling the discharge electrode to discharge to an inner wall of a reaction chamber of a nuclear fusion reaction apparatus to generate an electric spark.

For example, a pulse voltage may be applied to the discharge electrode by the pulse power supply, so that the discharge electrode discharges to the inner wall of the reaction chamber of the nuclear fusion reaction apparatus to generate an electric spark.

In Step 304, acquiring, by an optical signal acquisition assembly, a spectral signal corresponding to the electric spark, and transmitting, by the optical signal acquisition assembly, the spectral signal to a spectrometer.

In Step 306, analyzing, by the spectrometer, the spectrum signal to obtain impurity information on a surface of the inner wall of the reaction chamber.

The step 302 to step 306 may refer to the relevant introduction to FIG. 1 and FIG. 2, and would not be described in detail in the embodiment of the present application.

In one embodiment, after step 306, the method may further include: outputting the impurity information to a plasma control unit, enabling the plasma control unit to control a plasma in the reaction chamber based on the impurity information. For this step, it may refer to the relevant introduction to the fusion reaction system mentioned above for reference, which would not be repeated here.

FIG. 4 is a flow chart of another impurity detection method provided in an embodiment of the present application. The method may be applied to the impurity detection system 10 on the surface of the inner wall of the nuclear fusion reaction chamber of FIG. 2. The method may be executed by the control unit controlled by a worker. As shown in FIG. 4, the method may include the following steps.

In Step 402, controlling a mechanical arm to drive the discharge electrode to move to a position facing towards a target region on the inner wall of the reaction chamber.

Where the target region may be a region where the impurity distribution needs to be determined set by a worker. The worker may operate the mechanical control unit to control the mechanical arm. As mentioned above, since the number of impurities attached to the bottom and the top of the reaction chamber is usually large, the target region may be set at the bottom or the top of the reaction chamber to ensure a good impurity detection effect.

In Step 404, controlling a pulse power supply to output a target voltage to the discharge electrode enabling the discharge electrode to emit an electric spark to the target region.

In Step 406, controlling the optical signal acquisition assembly to acquire a spectral signal corresponding to the electric spark and emit the spectral signal to the spectrometer.

In Step 408, controlling the spectrometer to analyze the spectrum signal to obtain the impurity information on the surface of the inner wall of the reaction chamber.

In Step 410, controlling the spectrometer to output the impurity information to the plasma control unit enabling the plasma control unit to control a plasma in the reaction chamber based on the impurity information.

The step 402 to step 410 may refer to the relevant introduction to FIG. 1 and FIG. 2, and would not be described in detail in the embodiment of the present application.

In summary, in the impurity detection method for the surface of the inner wall of the nuclear fusion reaction chamber provided in the embodiment of the present application, the discharge electrode discharges to the inner wall of the reaction chamber to generate an electric spark, the optical signal acquisition assembly may acquire a spectral signal corresponding to the electric spark, and the spectrometer may analyze the spectral signal to obtain impurity information on the surface of the inner wall of the reaction chamber. Since the electric spark may be triggered merely by applying a voltage to the discharge electrode, a triggering process of the electric spark is relatively simple, and a time consumption for generating the spectral signal through the electric spark is relatively short, and an analysis difficulty of the spectral signal is relatively low, so that the impurity information may be obtained simply and conveniently. Therefore, a detecting process of the impurities on the inner wall of the reaction chamber may be simplified, and the efficiency and effect of impurity detection may be improved.

The above describes specific embodiments of the present application. Other embodiments are within the scope of the appended claims. In some cases, the acts or steps recited in the claims may be performed in a different order than those in the embodiments and still achieve desirable results. In addition, the processes depicted in the drawings do not necessarily require the particular order shown or the sequential order to achieve desirable results. Multitasking and parallel processing are also possible or may be advantageous in some embodiments.

Those skilled in the art should also understand that the embodiments described in the specification are all preferred embodiments, and the acts and modules involved are not necessarily required for the present application. In the embodiments, the description of each embodiment has its own emphasis, and for a part not described in detail in a certain embodiment, reference may be made to the relevant description of other embodiments.

The preferred embodiments disclosed above are only intended to assist in elucidating the present application. The optional embodiments do not provide a detailed description of all the details, nor does it limit the scope of the present application to the specific embodiments described. Obviously, many modifications and variations are possible in light of the teachings of the present application. These embodiments are chosen and described in detail in order to better explain the principles of the present application and the practical application, so that those skilled in the art can better understand and use the present application.

## Claims

1. An impurity detection system, comprising: a discharge electrode, an optical signal acquisition assembly and a spectrometer; wherein,
the discharge electrode is arranged in a reaction chamber of a nuclear fusion reaction apparatus and faces towards an inner wall of the reaction chamber, and the discharge electrode is configured to discharge to the inner wall of the reaction chamber to generate an electric spark;
the optical signal acquisition assembly is connected with the spectrometer and is configured to acquire a spectral signal corresponding to the electric spark and transmit the spectral signal to the spectrometer; and
the spectrometer is configured to analyze the spectrum signal to obtain impurity information on a surface of the inner wall of the reaction chamber.

2. The impurity detection system according to claim 1, wherein, the discharge electrode is needle-shaped, and an end portion of the needle-shaped discharge electrode faces towards the inner wall of the reaction chamber.

3. The impurity detection system according to claim 1, wherein, the optical signal acquisition assembly comprises an optical fiber.

4. The impurity detection system according to claim 1, further comprising: a pulse power supply, connected with the discharge electrode and the inner wall of the reaction chamber, and configured to apply a pulse voltage to the discharge electrode and the inner wall of the reaction chamber.

5. The impurity detection system according to any one of claims 1 to 4, further comprising: a mechanical arm arranged in the reaction chamber, wherein, the discharge electrode is arranged at a front end of the mechanical arm; and
the mechanical arm is configured to drive the discharge electrode to move, to adjust a position of the discharge electrode relative to the inner wall of the reaction chamber.

6. The impurity detection system according to claim 5, wherein, the mechanical arm comprises: a plurality of sub-arms sequentially hinged together, and the discharge electrode is fixed with a sub-arm arranged at an end portion of the mechanical arm among the plurality of sub-arms.

7. The impurity detection system according to claim 5, further comprising: a mechanical control unit, connected with the mechanical arm and configured to control the mechanical arm to move.

8. The impurity detection system according to claim 5, wherein, the optical signal acquisition assembly is connected with the mechanical arm and is arranged close to the discharge electrode.

9. The impurity detection system according to claim 1, wherein, the discharge electrode is block-shaped or sheet-shaped.

10. The impurity detection system according to claim 1, wherein, the reaction chamber is provided with a photic region; and the optical signal acquisition assembly is arranged outside the reaction chamber and is configured to acquire the spectral signal via the photic region.

11. An impurity detection method, applied to an impurity detection system, comprising:
applying a voltage to a discharge electrode in the impurity detection system enabling the discharge electrode discharge to an inner wall of a reaction chamber of a nuclear fusion reaction apparatus to generate an electric spark;
acquiring, by an optical signal acquisition assembly in the impurity detection system, a spectral signal corresponding to the electric spark, and transmitting the spectral signal to a spectrometer in the impurity detection system; and
analyzing, by the spectrometer, the spectrum signal to obtain impurity information on a surface of the inner wall of the reaction chamber.

12. The method according to claim 11, further comprising: outputting the impurity information to a plasma control unit, enabling the plasma control unit control a plasma in the reaction chamber based on the impurity information.

13. The method according to claim 11, further comprising: controlling a mechanical arm to drive the discharge electrode to move to a position facing towards a target region on the inner wall of the reaction chamber.

14. The method according to claim 13, wherein, applying a voltage to a discharge electrode in the impurity detection system comprises: controlling a pulse power supply to output a target voltage to the discharge electrode enabling the discharge electrode emit the electric spark to the target region.

15. A fusion reaction system, comprising: a nuclear fusion reaction apparatus and the impurity detection system according to any one of claims 1 to 10; wherein,
the impurity detection system is configured to detect the impurity information on the surface of the inner wall of the reaction chamber in the nuclear fusion reaction apparatus.

16. The fusion reaction system according to claim 15, further comprising: a plasma control unit, connected with the impurity detection system and configured to control a plasma in the reaction chamber based on the impurity information.
